# EUROPEAN PATENT APPLICATION

(11) **EP 2 015 546 A2**
(43) Date of publication of application: **14.01.2009**
(21) Application number: 08012294.8
(22) Date of filing: 08.07.2008
(51) Int. Cl.: H04M 1/253, H04M 1/2745

(54) **Call establishment using alphanumeric addresses**

(30) Priority: 13.07.2007 TW 96125515
(71) Applicant: Chen, Scanner, Xizhi City T'ai pei 221 (TW)
(72) Inventor: Chen, Scanner, Xizhi City T'ai pei 221 (TW)
(74) Representative: Muttock, Neil John

(57) **Abstract**

A communication system and method facilitating a user to directly dial an account network-based telephone user with a combined alphabet and numeral account via a conventional telephone and computer (PC) is disclosed. The computer (PC) is provided with a set of predetermined alphabet and numeral code correspondence table. In addition, all the extended units (EX1, EX2, EX3) coupled to the telephone constitute an exchange communication system, let the telephone in the different indoor place can directly call the network-based telephone.

## Description

### FIELD OF THE INVENTION

The present invention relates to a network-based telephone communication technology, and more specifically to a communication system and method for combined alphabet and numeral account.

### BACKGROUND OF THE INVENTION

Computer network-based telephone technology is to communicate by operating a computer and making a phone call on internet, which is compressing an analog speech signal into a digital data package, and then realizing a point-to-point real-time speech transmission on the internet. By using the internet is not only realising the real-time voice service providing, but also let users may have a long distance telephone conversation around the world without PSTN (public switched telephone network).

### SUMMARY OF THE INVENTION

The user account code (communicating network-based telephone account) of general computer network-based telephone (Instant Messaging), is combined with alphabets, symbols and numbers to compose a specific account for identifying users. When users dial a called end, it needs to select a called end user at a location-based computer for communication. Therefore, when users dial called end, they need to execute the calling procedure again. It causes users inconvenient and restricted.

An object of the present invention is to determine the calling telephone code (0-9 # * etc.) that users dial, and to translate the code by CPU with build-in predetermined numeral code. After translating the received dialing code into a called end's user account code, the code is transmitted from audio circuit to computer, in order to complete the communication request for calling from a far end computer network-based telephone user.

To fulfill the above object, the present invention provides a communication system and method facilitating a user to directly dial an account network-based telephone user with a combined alphabet and numeral account via a conventional telephone and computer. The computer is provided with a set of predetermined alphabet and numeral code correspondence table. In addition, all the extended units coupled to the telephone constitute an exchange communication system, let the telephone in the different indoor place can directly call the network-based telephone

### BRIEF DESCRIPTION OF THE DRAWINGS

The present invention will be apparent to those skilled in the art by reading the following description of preferred embodiments thereof and the best mode for carrying out the present invention, with reference to the attached drawings, in which:
FIG. 1 is a functional block diagram of a system of the present invention;
FIG. 2 shows a functional block diagram of the base unit of FIG. 1;
FIG. 3 shows an alphabet and numeral code correspondence table of the present invention; and
FIG. 4 shows a functional block diagram of the extended units of FIG. 1.

### DETAILED DESCRIPTION OF THE PREFERRED EMBODIMENTS

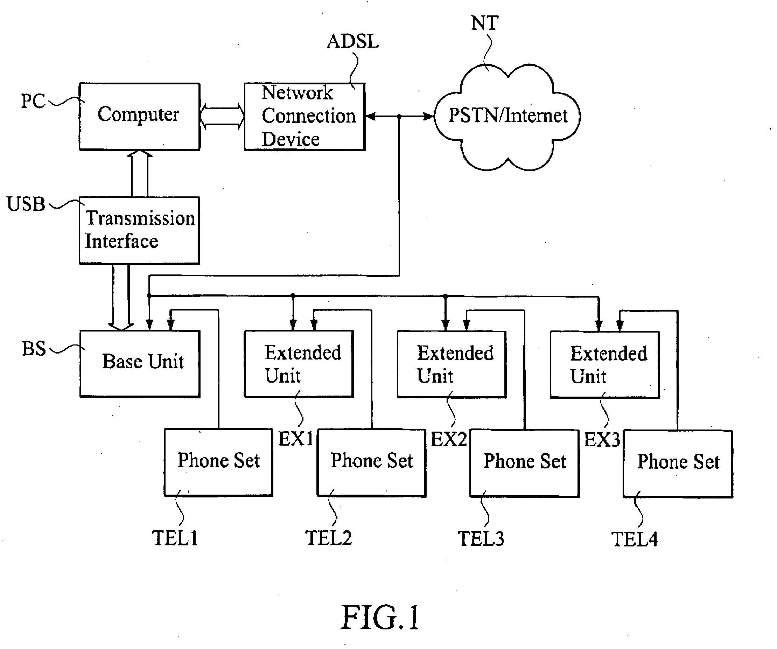

As shown in FIG. 1, the system includes a computer PC, a base unit BS, a plurality of extended units EX 1, EX 2, EX3, wherein the base unit BS and the extended units EX1, EX2, EX3 connect to a phone set TEL1, TEL2, TEL3, TEL4 respectively. The computer PC connects to a network system, for example, composed of a PSTN/Internet NT and a network connection device ADSL. Each phone set TEL1, TEL2, TEL3, TEL4 may dial directly to a called end user (e.g. SKYPE account) under operation of a user. Users may selectively dial, register, and delete the account by the key-set of the present invention. Users also may selectively dial a PSTN or SKYPE account. Each phone set TEL1, TEL2, TEL3, TEL4 is able to communicate by internal calling.

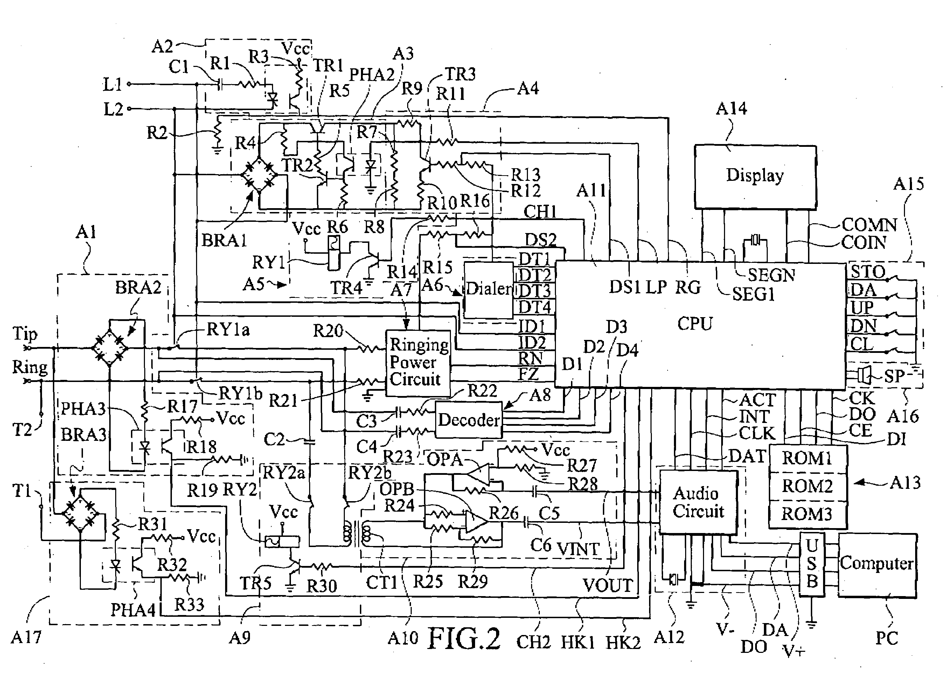

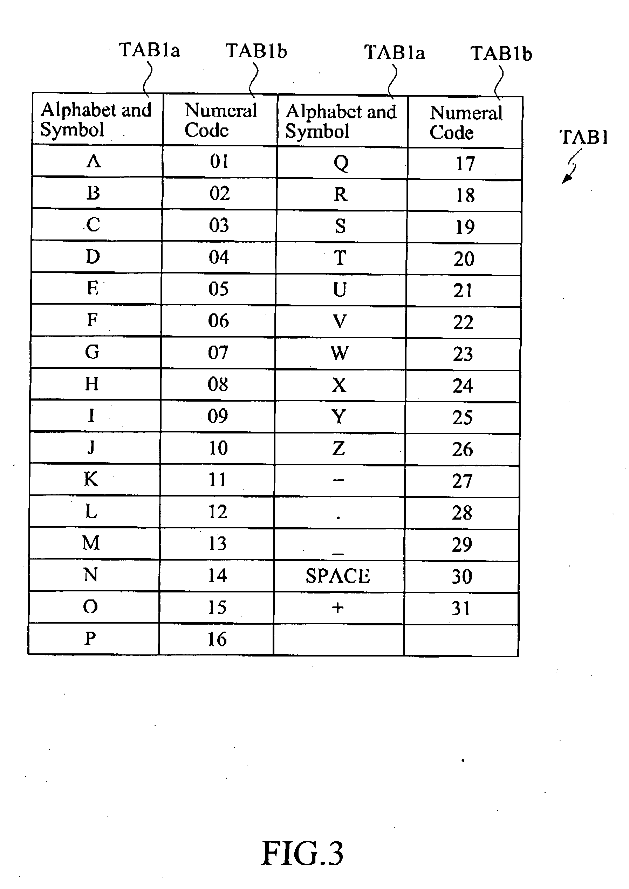

FIG. 2 shows a functional block diagram of a base unit of FIG. 1, demonstrated as follow:
1. Calling detection circuit A 1
   This circuit is composed of a bridge rectifier BRA2, resisters R31, R32, R33, and an optical coupler PHA3. Line ends Tip. Ring connect to extended unit on the same line. Telephone connection ends T1, T2 connect to the phone set of base unit. When user hooks up the base unit or the phone set on the same line, calling detection circuit A1 applies an electric current via a ringing power circuit A7, the signal line HK1 presents a positive voltage level to notify the base unit or the extended unit of the CPU A11 to produce a calling demand.
2. Incoming call detection circuit A2
   This circuit is composed of a capacitor C1, resisters R1, R2, R3, and optical coupler PHA1, may detects an incoming call demand from PSTN. When the incoming call detection circuit A2 detects the calling from PSTN, the signal line LP presents a high voltage level, and the CPU may execute corresponding processes.
3. Loop control circuit A3
   This circuit is composed of a bridge rectifier BRA1, resistors R4, R5, R6, R11, transistors TR1, TR2, and an optical coupler PHA2. The circuit bridge connects to the line end L1, L2 via the bridge rectifier BRA1. When it needs to make a call to the PSTN, the CPU A11 drives signal line LP to constitute a direct current loop for communication, and enable the far end exchange to detect a communicating demand from the user.
4. Calling circuit ∧4
   This calling circuit ∧4 is composed of resistors R7, R8, R 12, R13 and a transistor TR3. Its signal output is controlled by CPU signal line DS1. The circuit may coordinate the loop control circuit A3, and the major utility of this circuit is to amplify the calling signal of the calling circuit A4, and transmit it to the local call line for exchange and receiving.
5. PSTN communication switching circuit A5
   This circuit is composed of a relay RY1, a transistor TR4 and a resister R14. When the phone set of the base unit or extended unit needs to communicate with the PSTN, the relay RY1 is driven by CPU A11, and connects the phone set to line 1,1, L2 to constitute a communication.
6. Dialer A6
   The dialer A6 is composed of a FSK/ DTMF signal generator, which is controlled by CPU signal lines DT1, DT2, DT3, DT4;
   The first function of the dialer A6 is to transmit a called end user's numeral dialing code to the PSTN, in order to communicate with numeral users,
   The second function of the dialer A6 is to send a computer user's account code to the extended unit, and transfer a received numeral code from the PSTN user.
   The third function of the dialer A6 is to send out a dialing tone or busy tone to the phone set at the signal line end.
7. Ringing power circuit A7
   This circuit is composed of resistors R20, R21, and a ringing power generator, which may provides phone set on line with a required working current when dialing.
   This circuit may generate a dialing tone or busy tone in dialing.
   When a computer network-based phone calls, the circuit may transmit an incoming call ringing signal to the call end under the CPU's control, and drives the phone ringing and responding.
8. Decoder A8
   This circuit is composed of a DTMF decoder, resisters R22, R23, and capacitors C3, C4 that bridge connect to the communication path. The primary object of the circuit is to sequentially acquire the called end's dialing code, decode and transmit it to CPU A11. After that, according to the alphabet and numeral code correspondence table, the code is translated into called end user account for dialing or transferring to PSTN user.
9. Computer communication switching circuit A9
   This circuit is composed of a relay RY2, a transistor TR5, and a resister R30. When the device implements computer network communication, CPU A11 drives the relay switch and connects the communication coupling circuit A10 to the communication path via coupler CT1, in order to constitute a communication between called end telephone and base unit or extended unit.
10. Communication coupling circuit A10
   This circuit is composed of a rectifier coil CT1, resisters R24, R25, R26, R27, R28, R29, capacitors C5, C6, operational amplifiers OPA, OPB. The primary function of the circuit is to output the two-line signal of audio circuit A12, and to input the two-line signal (input and output arc four-line). Through matching of the parts as above, it can be transformed to a convention two-line form, and vice versa.
   When it needs to make a call, CPU A11 drives relay RY to act, then the telephone connects to network-based telephone communication link via calling detection circuit A1, relay contact RY1a, RY1b communication path to constitute a communication.
   On the contrary, when the device detects a network-based telephone call, CPU also drives the relay RY1 to enable the phone connect to network-based telephone communication path via calling detection circuit A1 to constitute a communication.
11. CPU (A11)
   (CPU A11 is in charge of signal determination and processing selected dialing procedure. According to act signals of the related detection circuits, CPU A11 may control dialing, selective picking and incoming call responding.
   In accordance with the numeral code transfer alphabet and numeral code correspondence table built in the memory, it may translate the numeral code from telephone into combined alphabet account code, and translate the combined alphabet account code from call end into the numeral dialing code vice versa.
   CPU A11 can store the translated and received dialing code in the memory, and execute deletion, search, and transfer calling functions by the key-set.
   CPU A11 also can transmit and control each signal of the device, and send out a hearable corresponding signal via the speaker SP.
12. Audio circuit A12
   This circuit can transform a received digital signal from the internet into a hearable analog signal by audio chip, or transform an input analog signal into a digital signal, then transmit it to the internet, In addition, the audio circuit A12 connects to computer PC via a transmission interface USB.
   Another function of the audio circuit A12 is to receive incoming calls from network-based telephone through detection and driving of CPU A11, and transmit the call end account to CPU A11.
13. Memory A13
   The memory is divided into three parts :
   The first part of the memory is an alphabet and numeral code correspondence table memory ROM1, which may store at least an alphabet and numeral code correspondence table (as shown in Fig. 3). The table includes corresponding date of a plurality of alphabet codes TAB1a and combined numeral codes TAB1b. CPU can translate the alphabet codes TAB1a into combined numeral codes TAB1b and vice versa according to the alphabet and numeral code correspondence table.
   The second part of the memory is a user corresponding account memory ROM2, which is a store region(phone book), and to store at least one user corresponding account, it can be added, deleted, checked and edited via CPU A11.
   The third part of the memory is a temporary storage memory ROM3, can store at least one call-in or call-out user numeral code.
14. Display A 14
   The display ∧14 can show user's combined alphabet code, corresponding numeral code, and display the visible operation information.
15. Key-set A15
   The key-set comprises STO, DA, UP, DN, CL buttons, which can directly edit, search, dial, pick, add and delete the user account in the phone book.
16. Speaker A 16
   Speaker unit SP is controlled by CPU A11 to output various hearable alarm tone, and to be a man machine interface to assist the user to operate.
   When the extended unit sends an internal line demand, CPU A11 drives the speaker unit to send an internal line calling tone.
17. Base unit calling detection circuit A17
   This circuit is composed of a bridge rectifier BRA3, resisters R31, R32, R33, and an optical coupler PHA4. When user hooks up the base unit, the signal line HK2 of the CPU A11 presents a positive voltage level for purpose of determining the calling is from the base unit or the extended unit. Therefore, the CPU A11 may receive the dialing code across the phone lines and execute corresponding processes.

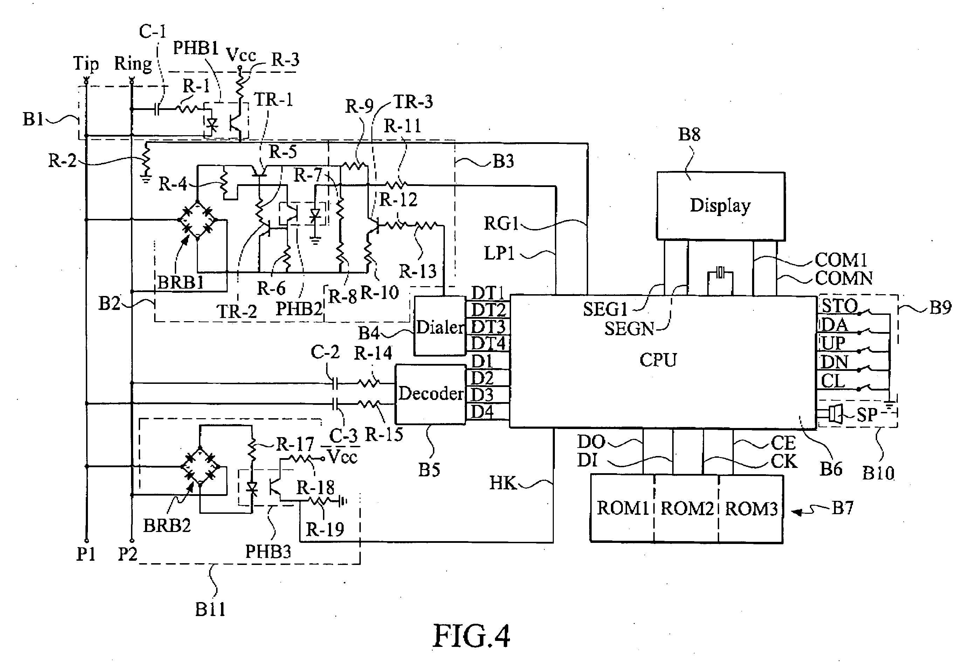

FIG. 4 shows a functional block diagram of the extended units of FIG. 1, demonstrated as follow:
1. Incoming call detection circuit B1
   This circuit is composed of a capacitor C1, resisters R1, R2, R3, and optical coupler PHB1, it can monitor ringing signal at the ends Tip, Ring , When detecting the ringing, incoming call detection circuit B1 have the signal line LP to present a high voltage level, which is provided for CPU A11 to determine the received dialing code from decoder whether is incoming call or calling call, and execute corresponding processes.
2. Loop simulating circuit B2
   This circuit is composed of a bridge rectifier BRB1, transistors TR-1, TR-2, resisters R4, R5, R6, R11 and an optical coupler PHB2, and the circuit bridge connects to the ends Tip, Ring. When the extended unit is switched on by the key-set B9, CPU B6 drives the signal line LP1 to compose a direct current loop for communication required, and the base unit notifies the extended unit to start dialing.
3. Calling circuit B3
   This circuit coordinates the loop simulating circuit B2, and the primary object is to amplify the dialing signal from calling circuit B3, and transmit it to the ends Tip, Ring for base unit receiving. The circuit is composed of a bridge rectifier BRB1, a transistor TR-3, resisters R7, R8, R12, R13.
4. Dialer B4
   The dialer comprises a FSK/ DTMF signal generator, which is controlled by CPU signal lines DT1, DT2, DT3, DT4;
5. Decoder B5
   This circuit is composed of a DTMF decoder, resisters R14, R15, and capacitors C2, C3 bridge connected to the communication path P1, P2;
   When extended unit telephone system enters a user account, the dialing code of the called end is decoded by decoder B5, and then transmitted to the CPU B6. After that, according to the alphabet and numeral code correspondence table, it is translated into called end user account and stored in phone book region memory.
   This circuit is applied to receive the incoming user account code from computer network, and numeral code from the PSTN user
6. CPU B6
   CPU B6 is in charge of signal determination and processing selected dialing procedure. According to act signals of the related detection circuits, CPU B6 may control dialing, selective picking and incoming call responding.
   In accordance with the numeral code transfer alphabet and numeral code correspondence table build in the memory, it may translate the numeral code from telephone into combined alphabet account code, and translate the combined alphabet account code from call end into the numeral dialing code vice versa.
   CPU B6 can store the translated and received dialing code in the memory, and execute deletion, search, and transfer calling functions by the key-set B9.
   CPU B6 also can transmit and control each signal of the device, and send out a hearable corresponding signal via the speaker SP.
7. Memory B7
   The memory B7 is divided into three parts :
   The first part of the memory is include an alphabet and numeral code correspondence table and extended unit number, so that CPU B6 may translate the alphabet codes into numeral codes, or translate the numeral codes into alphabet codes according to the table.
   The second part of the memory is a storage region corresponding user account (phone book), it can be added, deleted, checked and edited via CPU B6.
   The third part of the memory is a temporary storage memory ROM3, can store at least one call-in or call-out user numeral code.
8. Display B8
   The display B8 may present the user's combined alphabet code, corresponding numeral code, and visible operation information.
9. Key-set B9
   The key-set B9 comprises STO, DA, UP, DN, CL buttons, which can directly edit, search, dial, pick, add and delete the user account in the phone book.
10. Speaker B10
   Speaker B10 comprises a speaker unit SP, controlled by CPU B6 to output various hearable alarm tone, and to be a man machine interface to assist the user to operate.
   When the extended unit sends an internal line demand, CPU B6 drives the speaker unit SP to send an internal line calling tone.
11. Extended unit calling detection circuit B11
   This circuit is composed of a bridge rectifier BRB2, resisters R17, R18, R19, and optical coupler PHB3. When user hooks up the extended unit, the signal line HK of the CPU B6 presents a positive voltage level for purpose of determining the calling is from the base unit or the extended unit. Therefore, the CPU B6 may receive the dialing code across the phone lines and execute corresponding processes.

### Working content of base unit

### 1. Base unit dialing mode

Procedures of calling an account type network-based telephone user

When phone set of base unit dial computer network end user, if it is a first time calling, the base unit can transform the user's alphabet code into corresponding numeral code, which can be directly dial by conventional telephone.

If user account for dialing is tone8879, it can be translated into 20151405 and 8879 according to the table. Then user hooks up the telephone to enable the base unit calling detection circuit A17 and calling detection circuit A1 to act, and then signal lines HK1, HK2 present a positive voltage level to be ready to receive dialing code.

Dial * 20151405 * 8879 on number keyboard of base unit, then the dialing code is received by decoder, and transmitted to CPU A11 after decoding.

When CPU A11 receives the dialing code, the numbers between two * symbols need to translate into alphabets for determining. So * 20151405 * convert to "tone" and add 8879. Then the alphabets and numbers * 20151405 * 8879 are shown on the display A14 simultaneously. After that, the translated account tone8879 is delivered to computer end, and drives rectifier RY2 via signal line CH2 to work and connects to the communication coupling circuit A10 for constituting a communication between the base unit end and computer network. The base unit dialing and calling procedure is finished.

Procedures of calling a numeral type network-based telephone user

When the CPU A11 receives the dialing code, it may determine that the dialing code belongs to numeral user account. Then the CPU A11 drives the loop control circuit A3 to work via the signal line LP, and composes the PSTN to form the direct current loop, let the far end exchange prepare to receive the dialling number.

The CPU A11 switches on the calling circuit A4, and transmits the received numeral code to dialer. The casting circuit A4 amplifies the code to PSTN line to provide the far end exchange to receive the call end user telephone number.

When the telephone code transmission is complete, the CPU A11 drives the relay RY1 to act via the signal line CH1, then switches the communication path to the line L1. L2 of the PSTN, and constitutes the communication connection between the base unit end and PSTN. After that, the signal lines LP, DS1 release the loop control circuit A3 and complete the calling procedure of the PSTN transferring.

Base unit selective dialing mode

If the computer user account that base unit would dial is already stored in the memory of the base unit, user may check the user account by key-set of the base unit.

The display A14 may sequentially display the user accounts in the memory in accordance with operation of the key-set A 15.

After marking the target user, user presses the DA button. If the call end is a user with alphabet account, the CPU A11 may implement the account dialing procedure to complete the calling from network-based telephone.

If the call end is a user with numeral code, the CPU A11 may implement the numeral dialing procedure to complete the calling from PSTN telephone.

After the dialing procedure, the CPU A11 drives the speaker unit SP to send out a hearable calling end tone, and then user can hook up the phone and wait for communication from call end.

### 2. Computer network incoming call responding procedure.

When a calling is from a far end computer user, a signal is received from the transmission interface. The CPU A11 is notified via the audio circuit A12 and transmits the signal to the display for displaying, in addition, the account is translated into a numeral code for displacing.

The CPU A11 releases signal line DS2 and translates the account into a displayable numeral code. The numeral code is sequentially transmitted to end-points Tip, Ring via the dialer A6 and the ringing power circuit A7, to apply to extended units on the same line may receive the incoming call user account, and display it on the display A14. In addition, the account is translated into a numeral code and display on the display A14 simultaneously.

The CPU A11 drives signal line RN, FZ and ringing power circuit A7 to transmit ringing signal to end-points Tip, Ring to produce a ringing sound. When user hooks up the telephone, the calling detection circuit A1 is activated and stops the ringing via CPU A11. The CPU A11 drives signal line CH2 to enable the relay RY2 to work, and connect to the communication coupling circuit A10 to constitute a communication.

### 3. PSTN incoming call responding procedure.

When the PSTN is culling, the incoming call detection circuit A2 of the base unit detects the ringing signal and enables the signal line RG to present a high voltage level to notify the CPU A11 for the PSTN incoming call.

The CPU A11 of the base unit also bridge connects to the line L1, L2 to receive the incoming calling code from the PSTN.

The CPU A11 releases the signal line DS2 and displays the received PSTN incoming calling code on the display A14, and transmit it sequentially to the end-point Tip, Ring to let the extended unit on the same line is able to receive the telephone code and show it on the display A14.

When the telephone code transmission is complete, the CPU A11 drives the signal line CH1 to enable the relay RY1 to act, then switches the communication path to the line L1, L2. The PSTN directly ring to the devices on the same line.

When a telephone responds and calls, the calling detection circuit A1 of the base unit presents positive voltage level, and the CPU A11 retains the relay RY1 acting. On the contrary, if no one responds and the incoming call detection circuit A2 does not receive ringing signal, the CPU releases the relay RY1 and recovers the lines in a standby state.

### 4. Calling end release procedure

When the communication of the phone set of the base unit or extended unit is complete, user hangs up the phone and the base unit calling detection circuit A1 enables the signal line HK1 to present a low voltage level, and notifies the CPU A11 to complete comnunication. And the CPU A11 releases the relay RY1 in PSTN communication mode, or releases the relay RY2 in network-based telephone communication mode to complete the procedure.

### 5. Internal line calling procedure.

The base unit or extended unit is able to dial each other for internal calling, and executes the internal communication function according to the device. When any device needs to call other device may process following procedures :
User hooks up the telephone and hears a dialing warning tone, enters the extension number e.g. **1 to **9, which represent for calling the extension 1 to extension 9 respectively.
The extension of the called end sends out an internal calling tone via the speaker unit SP.
The call end may repeatedly press to call during the period for waiting, until the called end answers or transfers to other extension.

### 6. Working content of extended unit

### Extended unit dialing mode

When phone set of the extended unit dials to a computer network end user, if it is a first time calling, the extended unit may translate the user's alphabet code into corresponding numeral code, which can be directly dial by conventional telephone.

If user account for dialing is tone 5978, it can be translated into 20151405 and 5978 according to the table, and then user hooks up the telephone to enable the extended unit calling detection circuit B11, and the signal line HK presents a positive voltage level to enable the CPU B6 to prepare to receive dialing code.

User dials *20151405 * 8879 on number keyboard of extended unit, then the dialing code can be received by decoder B5 and transmit the code to CPU B6 after decoding.

When CPU B6 receives the dialing code, CPU B6 detects the numbers between two * symbols need to translate into alphabets for determining. So * 2015 1405 * convert to "tone" and add 8879. Then the alphabets and numbers * 20151405 * 8879 are shown on the display B8 together.

The base unit on the front line may received the code via the decoder B5 and decode the code by CPU B6.

The CPU B6 implements the account or numeral dialing procedure in accordance with property of the dialing code.

### Extended unit selective dialing mode

If the computer user account that base unit would dial is already stored in the memory 137 of the extended unit, user may check the user account by key-set B9 of the base unit.

The display may sequentially display the user accounts in the memory B7 in accordance with operation of the kcy-sct B9.

After marking the target user, press the DA button, the CPU B6 may drive the signal line LP1 to enable the loop simulating circuit B2 to act, and then form a direct current loop between the end-points Tip, Ring to enable the incoming call detection circuit B1 to act.

The CPU B6 acquires the marked user's account code via the memory B7, and then transmits it to calling circuit B3 via the dialer B4 for signal amplification. Through loop simulating circuit, it presents the dialing code signal between the end-points Tip, Ring so that the decoder of the extended unit receives it.

The CPU B6 implements the account or numeral dialing procedure in accordance with property of the dialing code.

When the procedure is complete, the CPU 136 may send out a hearable calling end tone, and then user may hook up the phone and wait for communication from call end.

### 7. User account storage editing procedure

Base unit or extended unit may transfer the incoming calling, user account from temporary storage region in the memory to the phone book storage region. After selecting the needed user account by the key-set, press the STO button and store the account in the phone book storage region, or delete it by pressing the CL button vice vcrsa.

Base unit or extended unit may also store the user account in the memory in advance. If user would store the account ken-3349 in the memory in advance (not call the user), may translate it into 11051427 and 3349. So that user may hook up the phone and enter # 20151405 # 3349 for received by decoder and transmit it to the CPU after translation.

When CPU receives the dialing code, CPU determines the numbers between two # symbols needed to translate into alphabets for determining. So #11051427 # is converted to "ken" and add 3349. Then the alphabets and numbers # 11051427 # 3349 are shown on the display together.

The CPU detects the first symbol of the dialing code is #, so that it will not implement the computer user casting procedure. However, after sending out the storage complete tone, CPU may process the other user account storage and recover to standby state when user hangs up the telephone.

## Claims

1. A communication system for communicating a network-based telephone user with a combined alphabet and numeral account through a network system by a phone set (TEL1, TEL2, TEL3, TEL4), comprising:
a computer (PC) connected to the network system via a network connection device (ADSL);
a memory (A13) connected to the computer (PC), having at least an alphabet and numeral code correspondence table;
at least one base unit (BS) connected to the computer (PC) via a transmission interface (USB), and the phone set (TEL1, TEL2, TEL3, TEL4) being connected to the base unit (BS); and
at least one extended unit (EX1, EX2, EX3) coupled to the base unit (13S).

2. The system as claimed in claim 1, **characterized in that** the base unit (BS) and each extended unit (EX1, EX2, EX3) connect to a phone set (TEL1, TEL2, TEL3, TEL4) respectively, the computer (PC) connects to a PSTN and internet (NT), the base unit (BS) is provided with a display (A14), each phone set (TEL1, TEL2, TEL3, TEL4) directly dial the network-based telephone user, and the combined alphabet and numeral account is displayed on the display (A14) of the base unit (BS).

3. The system as claimed in clam 2, **characterized in that** the base unit (BS) comprises a calling detection circuit (A1); an incoming call detection circuit (A2); a loop control circuit (A3); a calling circuit (A4); a PSTN communication switching circuit (A5); a dialer (A6); a ringing power circuit (A7); a decoder (A8); a computer communication switching circuit (A9); a communication coupling circuit (A10); a CPU (A11); an audio circuit (A12); a memory (A13); a display (A 4); a key-set (A15); and a speaker (A16); and a base unit calling detection circuit (A17).

4. The system as claimed in claim 1, **characterized in that** the extended unit (EX1, EX2, EX3) comprises an incoming call detection circuit (B1); a loop simulating circuit (B2); a calling circuit (B3); a dialer (B4); a decoder (B5); a CPU (B6); a memory (B7); a display (B8); a key-set (B9); a speaker (B10); and an extended unit calling detection circuit (B11).

5. A method for communicating a network-base telephone user with a combined alphabet and numeral account through a network system by a phone set (TEL1, TEL2, TEL3, TEL4), comprising a computer (PC) connected to the network system via a network connection device (ADSL); a memory (B7) connected to the computer (PC), having al least an alphabet and numeral code correspondence stable; at least one base unit (BS) connected to the computer (PC) via a transmission interface (USB), and the phone set (TEL1, TEL2, TEL3, TEL4) being connected to the base unit (BS); and at least one extended unit (EX1, EX2, EX3) coupled to the base unit (BS), comprising the following steps:
(a) the phone set (TEL1; TEL2, TEL3, TEL4) receives a combined alphabet and numeral account of the network-based telephone user under a dialing procedure and generates a set of corresponding code;
(b) the base unit (BS) receives the code from the phone set (TEL1, TEL2, TEL3, TEL4) and converts the code of the combined alphabet and numeral account to a numeral code by using the alphabet and numeral code correspondence table; and
(c) communicating with the network-based telephone user through the computer (PC) and the network system.

6. The method is claimed in claim 5, further comprising a step which simultaneously displays the combined alphabet and numeral account and numeral code corresponding to the combined alphabet and numeral account.

7. The method as claimed in claim 5, **characterized in that** the dialing procedure comprises an account dialing procedure, a numeral dialing procedure and a base unit selective dialing mode.

8. The method as claimed in claim 5, further comprising a computer network incoming call responding procedure.

9. The method as claimed in claim 5, Further comprising a PSTN incoming call responding procedure.

10. The method as claimed in claim 5, further comprising a calling end release procedure.

11. The method as claimed in claim 5, further comprising an internal line calling procedure.

12. The method as claimed in claim 5, **characterized in that** the extended unit (EX1, EX2, EX3) comprises an extended unit dialing mode and an extended unit selective dialing mode.

13. The method as claimed in claim 12, **characterized in that** the extended unit (EX1, EX2, EX3) comprises a user account storage editing procedure.
